# EUROPEAN PATENT APPLICATION

(11) **EP 4 474 896 A1**
(43) Date of publication of application: **11.12.2024**
(21) Application number: 23178125.3
(22) Date of filing: 07.06.2023
(51) Int. Cl.: G02F 1/35, G02F 1/365

(54) **RADIATION SOURCE ASSEMBLY FOR GENERATING BROADBAND RADIATION**

(71) Applicant: ASML Netherlands B.V., 5500 AH Veldhoven (NL)
(72) Inventor: CRAUS, Cristian Bogdan, Veldhoven (NL); ABDOLVAND, Amir, Veldhoven (NL); DOMALAPALLY, Phani, Kumar, Veldhoven (NL); BAUERSCHMIDT, Sebastian, Thomas, Veldhoven (NL); TEUNISSEN, Paulus, Antonius, Andreas, Veldhoven (NL)
(74) Representative: ASML Netherlands B.V.

(57) **Abstract**

A radiation source assembly for generating broadband radiation. The radiation source assembly comprises a gas cell enclosing a hollow core fiber, wherein the gas cell comprises an input port arranged to receive pump radiation, and an output port arranged to output the broadband radiation, wherein the gas cell and a hollow core of the hollow core fiber is filled with a gas composition. The radiation source assembly further comprises at least one getter provided within the gas cell and at least partially surrounded by the gas composition, wherein the hollow core fiber is arranged to receive the pump radiation at an input end of the hollow core fiber, and output the broadband radiation at an output end of the hollow core fiber.

## Description

### FIELD

The present invention relates to a radiation source assembly for generating broadband radiation. In particular, the present invention relates to radiation source assembly comprising a gas cell enclosing a hollow core fiber, and at least one getter is provided within the gas cell and at least partially surrounded by a gas composition in the gas cell.

### BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-k₁ lithography may be used to process features with dimensions smaller than the classical resolution limit of a lithographic apparatus. In such process, the resolution formula may be expressed as CD = k₁×λ/NA, where λ is the wavelength of radiation employed, NA is the numerical aperture of the projection optics in the lithographic apparatus, CD is the "critical dimension" (generally the smallest feature size printed, but in this case half-pitch) and k₁ is an empirical resolution factor. In general, the smaller k₁ the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low k1.

In the field of lithography, many measurement systems may be used, both within a lithographic apparatus and external to a lithographic apparatus. Generally, such a measurements system may use a radiation source to irradiate a target with radiation, and a detection system operable to measure at least one property of a portion of the incident radiation that scatters from the target. An example of a measurement system that is external to a lithographic apparatus is an inspection apparatus or a metrology apparatus, which may be used to determine properties of a pattern previously projected onto a substrate by the lithographic apparatus. Such an external inspection apparatus may, for example, comprise a scatterometer. Examples of measurement systems that may be provided within a lithographic apparatus include: a topography measurement system (also known as a level sensor); a position measurement system (for example an interferometric device) for determining position of a reticle or wafer stage; and an alignment sensor for determining a position of an alignment mark. These measurement devices may use electromagnetic radiation to perform the measurement.

Some measurement systems may use radiation having a range of different wavelengths to perform one or more measurements. This may be enabled for example by providing a broadband radiation source, such as a supercontinuum radiation source. A supercontinuum radiation source may comprise a hollow core fiber in which broadband radiation is generated through spectral broadening of received input radiation, wherein the input radiation may often be referred to as pump radiation. The process of spectral broadening may rely on nonlinear effects, for example on the interaction of the confined pump radiation with a gas composition/gas mixture exhibiting a substantial nonlinear response.

Described herein are assemblies, apparatus, and methods for providing broadband radiation that have an improved output and/or lifetime.

### SUMMARY

According to one aspect of the present disclosure there is provided a radiation source assembly for generating broadband radiation, the radiation source assembly comprising: a gas cell enclosing a hollow core fiber, wherein the gas cell comprises an input port arranged to receive pump radiation, and an output port arranged to output the broadband radiation, wherein the gas cell and a hollow core of the hollow core fiber is filled with a gas composition; and at least one getter provided within the gas cell and at least partially surrounded by the gas composition; wherein the hollow core fiber is arranged to receive the pump radiation at an input end of the hollow core fiber, and output the broadband radiation at an output end of the hollow core fiber.

The at least one getter advantageously absorbs moisture and other undesired compounds (e.g. unwanted residual gases) to provide a clean environment in the gas cell and thereby increasing the lifetime of the radiation source assembly.

A getter of the at least one getter may be positioned: within the gas cell at a distance from the input port of less than 5mm, optionally less than 2mm; and further optionally less than 1.5mm; and/or within the gas cell at a distance from the input end of the hollow core fiber of less than 5mm, optionally less than 2mm; and further optionally less than 1.5mm. A getter of the at least one getter is positioned: within the gas cell at a distance from the output port of less than 5mm, optionally less than 2mm; and further optionally less than 1.5mm; and/or within the gas cell at a distance from the output end of the hollow core fiber of less than 5mm, optionally less than 2mm; and further optionally less than 1.5mm. By selecting the geometrical location of the getter to coincide with maximum flow at the input and/or output end of the hollow core fiber the capture of unwanted compounds is improved, thereby increasing the lifetime of the radiation source assembly.

A getter of the at least one getter is may be positioned within the gas cell at a distance from a section of the hollow core fiber in which broadband radiation is generated within the hollow core fiber in use, of less than 5mm, preferably less than 2mm; and more preferably less than 1.5mm.
By selecting the geometrical location of the getter to coincide with the point of white light generation in the hollow core fiber, the capture of unwanted compounds is improved, thereby increasing the lifetime of the radiation source assembly.

A plurality of getters may be provided within the gas cell and at least partially surrounded by the gas composition.

The plurality of getters are distributed within the gas cell at different locations along the hollow core fiber. By distributing the getter material in more than location along the fiber, the efficiency of keeping the gas composition (in particular a working gas) in optimum conditions over the entire lifetime of the gas cell is increased.

The radiation source assembly may comprise a particle filter provided within the gas cell and at least partially surrounded by the gas composition. The particle filter advantageously collects any suspended silica nanoparticles that may have formed with the gas cell. These silica nanoparticles cause glassy growth and limit the lifetime of the radiation source assembly, thus the particle filter advantageously increases the lifetime of the radiation source assembly

The gas cell may comprise: a first channel enclosing the hollow core fiber; and a second channel coupled to the first channel, the second channel providing a feedback path for the gas composition to circulate in the gas cell, wherein a getter of the at least one getter is provided within the second channel. This geometry of the gas cell advantageously leads to an optimized gas flow for cleaning the working gas in the gas composition.

The particle filter may be provided within the second channel.

A getter of the at least one getter may comprise a Zirconium Vanadium Iron alloy.

A getter of the at least one getter may comprise Ca₃O₄ and/or BaLi₄.

A getter of the at least one getter may comprise at least one of manganese oxide, silver oxide, and cobalt oxide.

A getter of the at least one getter may comprise one or more getter elements, each of the one or more getter elements comprising a porous material and zeolite crystals. The getter material is embedded in a highly porous media and has the function of trapping particles as well. This avoids the need to have a dedicated particle filter for trapping silica nanoparticles.

A pressure of the gas composition may be at least 5 bar, optionally at least 30 bar, optionally at least 60 bar.

The gas composition comprises at least one noble gas.

The gas composition may comprise a working gas.

The working gas may comprise at least one of Argon, Krypton, Neon, and Xenon.

The gas composition may comprise a cooling gas. The cooling gas may comprise helium and/or neon.

The gas composition may comprise a gas component which is less than 4% of the total gas composition in the hollow core fiber. Providing the getter in the gas cell advantageously allows for this proportion of the gas component to be maintained without having contamination issues.

The gas component may comprise hydrogen, at least one isotope of hydrogen (e.g. deuterium and/or tritium), or nitrogen.

The hollow core fiber may be a hollow core photonic crystal fiber. The hollow core photonic crystal fiber may comprise a single ring of capillaries around a hollow core.

The broadband radiation may comprise supercontinuum radiation.

The broadband radiation may comprise radiation with wavelengths in a range from 200 nm - 2000 nm.

The radiation source assembly may further comprise a pump input assembly configured to provide the pump radiation to the hollow core fiber.

The pump input assembly may comprise a pulsed pump laser.

According to another aspect of the present disclosure there is provided a metrology apparatus for determining a characteristic of interest of a structure on a substrate, the metrology apparatus comprising a radiation source assembly according to any of the embodiments described herein.

According to another aspect of the present disclosure there is provided an inspection apparatus for inspecting a structure on a substrate, the inspection apparatus comprising a radiation source assembly according to any of the embodiments described herein.

According to another aspect of the present disclosure there is provided a lithographic apparatus comprising a radiation source assembly according to any of the embodiments described herein.

According to another aspect of the present disclosure there is provided a litho cell comprising the metrology apparatus described herein, the inspection apparatus described herein, or the lithographic apparatus described herein.

According to another aspect of the present disclosure there is provided a method of generating broadband radiation, comprising: providing a radiation source assembly according to any of the embodiments described herein; and providing the pump radiation to the input end of the hollow core fiber to generate the broadband radiation.

In embodiments whereby the gas composition comprises a gas component which is less than 4% of the total gas composition in the hollow core fiber, the providing may comprise: evacuating the gas cell to a pressure of less than a predetermined pressure value; after said evacuating, saturating the getter with a gas corresponding to the gas component in the gas composition; after said saturating, evacuating the gas cell to a pressure of less than the predetermined pressure value; and filling the gas cell with the gas composition.

### BRIEF DESCRIPTION OF THE DRAWINGS

Embodiments of the invention will now be described, by way of example only, with reference to the accompanying schematic drawings, in which:
- Figure 1 depicts a schematic overview of a lithographic apparatus;
- Figure 2 depicts a schematic overview of a lithographic cell;
- Figure 3 depicts a schematic representation of holistic lithography, representing a cooperation between three key technologies to optimize semiconductor manufacturing;
- Figure 4 depicts a schematic overview of a scatterometer metrology tool;
- Figure 5 depicts a schematic overview of a level sensor metrology tool;
- Figure 6 depicts a schematic overview of an alignment sensor metrology tool;
- Figure 7 shows a schematic example of a contamination growth at the output end facet of a hollow-core fiber after an extended period of operation.
- Figure 8(a) depicts a schematic representation of a cross-section of an example hollow-core fiber that can be used for broadband generation;
   Figure 8(b) depicts a schematic representation of a hollow core fiber in a radiation source assembly;
- Figure 9 depicts a schematic representation of a getter positioned in a radiation source assembly;
- Figure 10 depicts a schematic representation of a plurality of getters positioned in a radiation source assembly;
- Figure 11 depicts a schematic representation of a getter positioned in a radiation source assembly in the vicinity of a section of a hollow core fiber in which broadband radiation is generated;
- Figure 12 depicts a schematic representation of a getter positioned in a radiation source assembly which comprises a gas cell having first and second channels;
- Figure 13 depicts a flow chart of steps in a method for generating broadband generation.
- Figure 14a is a waveform illustrating the pressure of hydrogen in the gas cell whilst saturating a getter in the gas cell with hydrogen, and filling the gas cell with a gas composition comprising hydrogen; and
- Figure 14b is a waveform illustrating a getter's absorption capacity for hydrogen during the saturating of the getter in the gas cell with hydrogen, and the filling of the gas cell with a gas composition comprising hydrogen.

### DETAILED DESCRIPTION

In the present document, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100 nm).

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

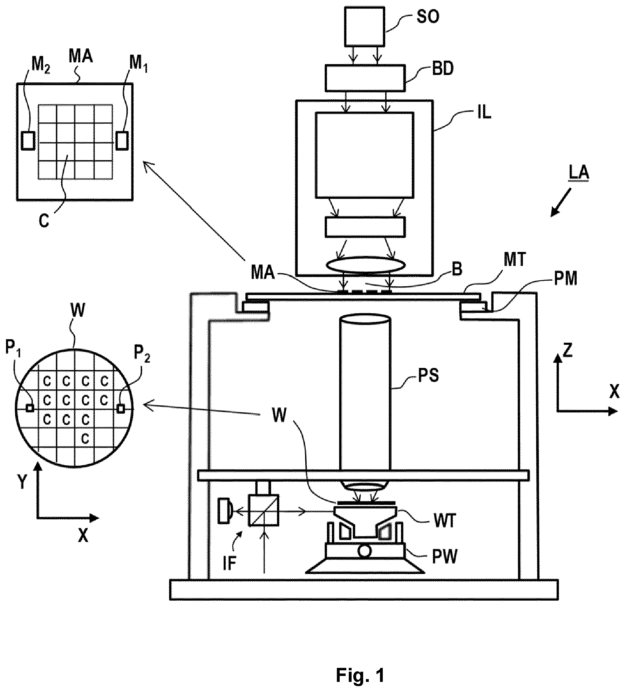

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a mask support (e.g., a mask table) MT constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks P1, P2. Although the substrate alignment marks P1, P2 as illustrated occupy dedicated target portions, they may be located in spaces between target portions. Substrate alignment marks P1, P2 are known as scribe-lane alignment marks when these are located between the target portions C.

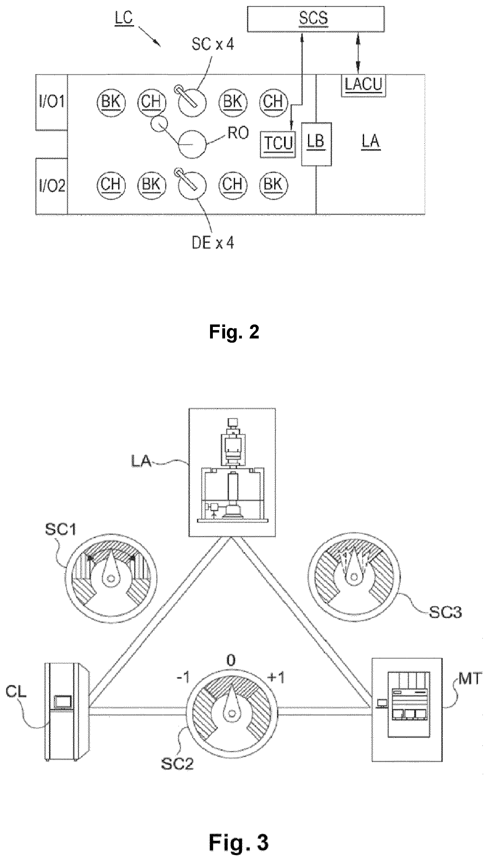

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Fig. 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Fig. 3 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Fig. 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Fig. 3 by the multiple arrows in the third scale SC3). Different types of metrology tools MT for measuring one or more properties relating to a lithographic apparatus and/or a substrate to be patterned will now be described.

In lithographic processes, it is desirable to make frequently measurements of the structures created, e.g., for process control and verification. Tools to make such measurement are typically called metrology tools MT. Different types of metrology tools MT for making such measurements are known, including scanning electron microscopes or various forms of scatterometer metrology tools MT. Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers may measure gratings using light from soft x-ray and visible to near-IR wavelength range.

In a first embodiment, the scatterometer MT is an angular resolved scatterometer. In such a scatterometer reconstruction methods may be applied to the measured signal to reconstruct or calculate properties of the grating. Such reconstruction may, for example, result from simulating interaction of scattered radiation with a mathematical model of the target structure and comparing the simulation results with those of a measurement. Parameters of the mathematical model are adjusted until the simulated interaction produces a diffraction pattern similar to that observed from the real target.

In a second embodiment, the scatterometer MT is a spectroscopic scatterometer MT. In such spectroscopic scatterometer MT, the radiation emitted by a radiation source is directed onto the target and the reflected or scattered radiation from the target is directed to a spectrometer detector, which measures a spectrum (i.e. a measurement of intensity as a function of wavelength) of the specular reflected radiation. From this data, the structure or profile of the target giving rise to the detected spectrum may be reconstructed, e.g. by Rigorous Coupled Wave Analysis and non-linear regression or by comparison with a library of simulated spectra.

In a third embodiment, the scatterometer MT is a ellipsometric scatterometer. The ellipsometric scatterometer allows for determining parameters of a lithographic process by measuring scattered radiation for each polarization state. Such metrology apparatus emits polarized light (such as linear, circular, or elliptic) by using, for example, appropriate polarization filters in the illumination section of the metrology apparatus. A source suitable for the metrology apparatus may provide polarized radiation as well. Various embodiments of existing ellipsometric scatterometers are described in US patent applications 11/451,599, 11/708,678, 12/256,780, 12/486,449, 12/920,968, 12/922,587, 13/000,229, 13/033,135, 13/533,110 and 13/891,410 incorporated herein by reference in their entirety.

In one embodiment of the scatterometer MT, the scatterometer MT is adapted to measure the overlay of two misaligned gratings or periodic structures by measuring asymmetry in the reflected spectrum and/or the detection configuration, the asymmetry being related to the extent of the overlay. The two (typically overlapping) grating structures may be applied in two different layers (not necessarily consecutive layers), and may be formed substantially at the same position on the wafer. The scatterometer may have a symmetrical detection configuration as described e.g. in co-owned patent application EP1,628,164A, such that any asymmetry is clearly distinguishable. This provides a straightforward way to measure misalignment in gratings. Further examples for measuring overlay error between the two layers containing periodic structures as target is measured through asymmetry of the periodic structures may be found in PCT patent application publication no. WO 2011/012624 or US patent application US 20160161863, incorporated herein by reference in its entirety.

Other parameters of interest may be focus and dose. Focus and dose may be determined simultaneously by scatterometry (or alternatively by scanning electron microscopy) as described in US patent application US2011-0249244, incorporated herein by reference in its entirety. A single structure may be used which has a unique combination of critical dimension and sidewall angle measurements for each point in a focus energy matrix (FEM - also referred to as Focus Exposure Matrix). If these unique combinations of critical dimension and sidewall angle are available, the focus and dose values may be uniquely determined from these measurements.

A metrology target may be an ensemble of composite gratings, formed by a lithographic process, mostly in resist, but also after etch process for example. Typically the pitch and line-width of the structures in the gratings strongly depend on the measurement optics (in particular the NA of the optics) to be able to capture diffraction orders coming from the metrology targets. As indicated earlier, the diffracted signal may be used to determine shifts between two layers (also referred to 'overlay') or may be used to reconstruct at least part of the original grating as produced by the lithographic process. This reconstruction may be used to provide guidance of the quality of the lithographic process and may be used to control at least part of the lithographic process. Targets may have smaller sub-segmentation which are configured to mimic dimensions of the functional part of the design layout in a target. Due to this sub-segmentation, the targets will behave more similar to the functional part of the design layout such that the overall process parameter measurements resembles the functional part of the design layout better. The targets may be measured in an underfilled mode or in an overfilled mode. In the underfilled mode, the measurement beam generates a spot that is smaller than the overall target. In the overfilled mode, the measurement beam generates a spot that is larger than the overall target. In such overfilled mode, it may also be possible to measure different targets simultaneously, thus determining different processing parameters at the same time.

Overall measurement quality of a lithographic parameter using a specific target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016-0161863 and published US patent application US 2016/0370717A1incorporated herein by reference in its entirety.

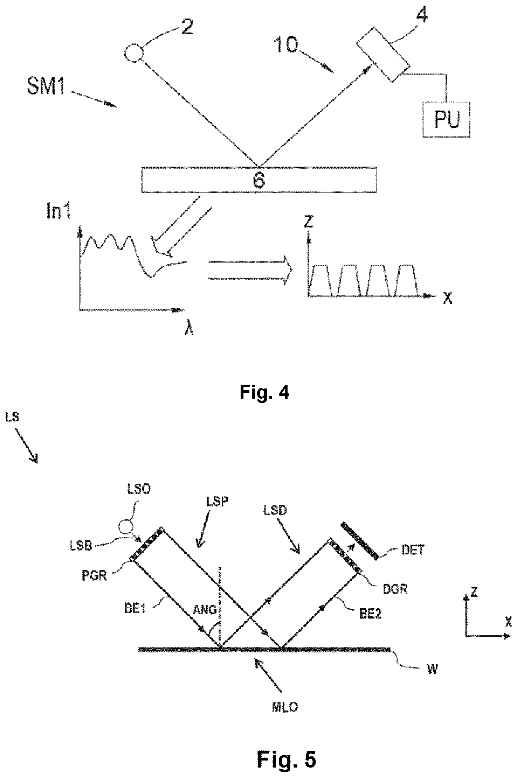

A metrology apparatus, such as a scatterometer SM1, is depicted in figure 4. It comprises a broadband (white light) radiation projector 2 which projects radiation onto a substrate 6. The reflected or scattered radiation is passed to a spectrometer detector 4, which measures a spectrum 10 (i.e. a measurement of intensity In1 as a function of wavelength λ) of the specular reflected radiation. From this data, the structure or profile giving rise to the detected spectrum may be reconstructed by processing unit PU, e.g. by Rigorous Coupled Wave Analysis and non-linear regression or by comparison with a library of simulated spectra as shown at the bottom of Figure 4. In general, for the reconstruction, the general form of the structure is known and some parameters are assumed from knowledge of the process by which the structure was made, leaving only a few parameters of the structure to be determined from the scatterometry data. Such a scatterometer may be configured as a normal-incidence scatterometer or an oblique-incidence scatterometer.

In lithographic processes, it is desirable to make frequently measurements of the structures created, e.g., for process control and verification. Various tools for making such measurements are known, including scanning electron microscopes or various forms of metrology apparatuses, such as scatterometers. Examples of known scatterometers often rely on provision of dedicated metrology targets, such as underfilled targets (a target, in the form of a simple grating or overlapping gratings in different layers, that is large enough that a measurement beam generates a spot that is smaller than the grating) or overfilled targets (whereby the illumination spot partially or completely contains the target). Further, the use of metrology tools, for example an angular resolved scatterometter illuminating an underfilled target, such as a grating, allows the use of so-called reconstruction methods where the properties of the grating can be calculated by simulating interaction of scattered radiation with a mathematical model of the target structure and comparing the simulation results with those of a measurement. Parameters of the model are adjusted until the simulated interaction produces a diffraction pattern similar to that observed from the real target.

Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers can measure in one image multiple targets from from multiple gratings using light from soft x-ray and visible to near-IR wave range.

A topography measurement system, level sensor or height sensor, and which may be integrated in the lithographic apparatus, is arranged to measure a topography of a top surface of a substrate (or wafer). A map of the topography of the substrate, also referred to as height map, may be generated from these measurements indicating a height of the substrate as a function of the position on the substrate. This height map may subsequently be used to correct the position of the substrate during transfer of the pattern on the substrate, in order to provide an aerial image of the patterning device in a properly focus position on the substrate. It will be understood that "height" in this context refers to a dimension broadly out of the plane to the substrate (also referred to as Z-axis). Typically, the level or height sensor performs measurements at a fixed location (relative to its own optical system) and a relative movement between the substrate and the optical system of the level or height sensor results in height measurements at locations across the substrate.

An example of a level or height sensor LS as known in the art is schematically shown in Figure 5, which illustrates only the principles of operation. In this example, the level sensor comprises an optical system, which includes a projection unit LSP and a detection unit LSD. The projection unit LSP comprises a radiation source LSO providing a beam of radiation LSB which is imparted by a projection grating PGR of the projection unit LSP. The radiation source LSO may be, for example, a narrowband or broadband radiation source, such as a supercontinuum light source, polarized or non-polarized, pulsed or continuous, such as a polarized or non-polarized laser beam. The radiation source LSO may include a plurality of radiation sources having different colors, or wavelength ranges, such as a plurality of LEDs. The radiation source LSO of the level sensor LS is not restricted to visible radiation, but may additionally or alternatively encompass UV and/or IR radiation and any range of wavelengths suitable to reflect from a surface of a substrate.

The projection grating PGR is a periodic grating comprising a periodic structure resulting in a beam of radiation BE1 having a periodically varying intensity. The beam of radiation BE1 with the periodically varying intensity is directed towards a measurement location MLO on a substrate W having an angle of incidence ANG with respect to an axis perpendicular (Z-axis) to the incident substrate surface between 0 degrees and 90 degrees, typically between 70 degrees and 80 degrees. At the measurement location MLO, the patterned beam of radiation BE1 is reflected by the substrate W (indicated by arrows BE2) and directed towards the detection unit LSD.

In order to determine the height level at the measurement location MLO, the level sensor further comprises a detection system comprising a detection grating DGR, a detector DET and a processing unit (not shown) for processing an output signal of the detector DET. The detection grating DGR may be identical to the projection grating PGR. The detector DET produces a detector output signal indicative of the light received, for example indicative of the intensity of the light received, such as a photodetector, or representative of a spatial distribution of the intensity received, such as a camera. The detector DET may comprise any combination of one or more detector types.

By means of triangulation techniques, the height level at the measurement location MLO can be determined. The detected height level is typically related to the signal strength as measured by the detector DET, the signal strength having a periodicity that depends, amongst others, on the design of the projection grating PGR and the (oblique) angle of incidence ANG.

The projection unit LSP and/or the detection unit LSD may include further optical elements, such as lenses and/or mirrors, along the path of the patterned beam of radiation between the projection grating PGR and the detection grating DGR (not shown).

In an embodiment, the detection grating DGR may be omitted, and the detector DET may be placed at the position where the detection grating DGR is located. Such a configuration provides a more direct detection of the image of the projection grating PGR.

In order to cover the surface of the substrate W effectively, a level sensor LS may be configured to project an array of measurement beams BE1 onto the surface of the substrate W, thereby generating an array of measurement areas MLO or spots covering a larger measurement range.

Various height sensors of a general type are disclosed for example in US7265364 and US7646471, both incorporated by reference. A height sensor using UV radiation instead of visible or infrared radiation is disclosed in US2010233600A1, incorporated by reference. In WO2016102127A1, incorporated by reference, a compact height sensor is described which uses a multi-element detector to detect and recognize the position of a grating image, without needing a detection grating.

The position measurement system PMS may comprise any type of sensor that is suitable to determine a position of the substrate support WT. The position measurement system PMS may comprise any type of sensor that is suitable to determine a position of the mask support MT. The sensor may be an optical sensor such as an interferometer or an encoder. The position measurement system PMS may comprise a combined system of an interferometer and an encoder. The sensor may be another type of sensor, such as a magnetic sensor. a capacitive sensor or an inductive sensor. The position measurement system PMS may determine the position relative to a reference, for example the metrology frame MF or the projection system PS. The position measurement system PMS may determine the position of the substrate table WT and/or the mask support MT by measuring the position or by measuring a time derivative of the position, such as velocity or acceleration.

The position measurement system PMS may comprise an encoder system. An encoder system is known from for example, United States patent application US2007/0058173A1, filed on September 7, 2006, hereby incorporated by reference. The encoder system comprises an encoder head, a grating and a sensor. The encoder system may receive a primary radiation beam and a secondary radiation beam. Both the primary radiation beam as well as the secondary radiation beam originate from the same radiation beam, i.e., the original radiation beam. At least one of the primary radiation beam and the secondary radiation beam is created by diffracting the original radiation beam with the grating. If both the primary radiation beam and the secondary radiation beam are created by diffracting the original radiation beam with the grating, the primary radiation beam needs to have a different diffraction order than the secondary radiation beam. Different diffraction orders are, for example,+1st order, -1st order, +2nd order and -2nd order. The encoder system optically combines the primary radiation beam and the secondary radiation beam into a combined radiation beam. A sensor in the encoder head determines a phase or phase difference of the combined radiation beam. The sensor generates a signal based on the phase or phase difference. The signal is representative of a position of the encoder head relative to the grating. One of the encoder head and the grating may be arranged on the substrate structure WT. The other of the encoder head and the grating may be arranged on the metrology frame MF or the base frame BF. For example, a plurality of encoder heads are arranged on the metrology frame MF, whereas a grating is arranged on a top surface of the substrate support WT. In another example, a grating is arranged on a bottom surface of the substrate support WT, and an encoder head is arranged below the substrate support WT.

The position measurement system PMS may comprise an interferometer system. An interferometer system is known from, for example, United States patent US6,020,964, filed on July 13, 1998, hereby incorporated by reference. The interferometer system may comprise a beam splitter, a mirror, a reference mirror and a sensor. A beam of radiation is split by the beam splitter into a reference beam and a measurement beam. The measurement beam propagates to the mirror and is reflected by the mirror back to the beam splitter. The reference beam propagates to the reference mirror and is reflected by the reference mirror back to the beam splitter. At the beam splitter, the measurement beam and the reference beam are combined into a combined radiation beam. The combined radiation beam is incident on the sensor. The sensor determines a phase or a frequency of the combined radiation beam. The sensor generates a signal based on the phase or the frequency. The signal is representative of a displacement of the mirror. In an embodiment, the mirror is connected to the substrate support WT. The reference mirror may be connected to the metrology frame MF. In an embodiment, the measurement beam and the reference beam are combined into a combined radiation beam by an additional optical component instead of the beam splitter.

In the manufacture of complex devices, typically many lithographic patterning steps are performed, thereby forming functional features in successive layers on the substrate. A critical aspect of performance of the lithographic apparatus is therefore the ability to place the applied pattern correctly and accurately in relation to features laid down in previous layers (by the same apparatus or a different lithographic apparatus). For this purpose, the substrate is provided with one or more sets of marks. Each mark is a structure whose position can be measured at a later time using a position sensor, typically an optical position sensor. The position sensor may be referred to as "alignment sensor" and marks may be referred to as "alignment marks". A mark may also be referred to as a metrology target.

A lithographic apparatus may include one or more (e.g. a plurality of) alignment sensors by which positions of alignment marks provided on a substrate can be measured accurately. Alignment (or position) sensors may use optical phenomena such as diffraction and interference to obtain position information from alignment marks formed on the substrate. An example of an alignment sensor used in current lithographic apparatus is based on a self-referencing interferometer as described in US6961116. Various enhancements and modifications of the position sensor have been developed, for example as disclosed in US2015261097A1. The contents of all of these publications are incorporated herein by reference.

A mark, or alignment mark, may comprise a series of bars formed on or in a layer provided on the substrate or formed (directly) in the substrate. The bars may be regularly spaced and act as grating lines so that the mark can be regarded as a diffraction grating with a well-known spatial period (pitch). Depending on the orientation of these grating lines, a mark may be designed to allow measurement of a position along the X axis, or along the Y axis (which is oriented substantially perpendicular to the X axis). A mark comprising bars that are arranged at +45 degrees and/or -45 degrees with respect to both the X- and Y-axes allows for a combined X- and Y- measurement using techniques as described in US2009/195768A, which is incorporated by reference.

The alignment sensor scans each mark optically with a spot of radiation to obtain a periodically varying signal, such as a sine wave. The phase of this signal is analyzed, to determine the position of the mark and, hence, of the substrate relative to the alignment sensor, which, in turn, is fixated relative to a reference frame of a lithographic apparatus. So-called coarse and fine marks may be provided, related to different (coarse and fine) mark dimensions, so that the alignment sensor can distinguish between different cycles of the periodic signal, as well as the exact position (phase) within a cycle. Marks of different pitches may also be used for this purpose.

Measuring the position of the marks may also provide information on a deformation of the substrate on which the marks are provided, for example in the form of a wafer grid. Deformation of the substrate may occur by, for example, electrostatic clamping of the substrate to the substrate table and/or heating of the substrate when the substrate is exposed to radiation.

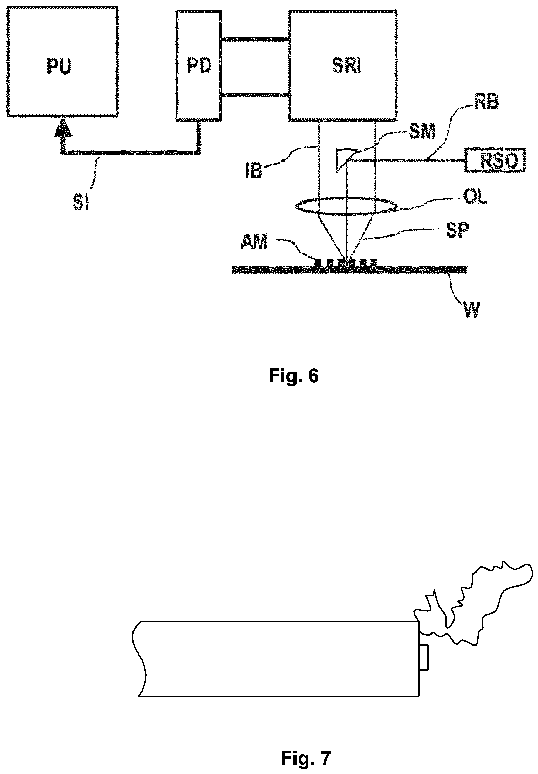

Figure 6 is a schematic block diagram of an embodiment of a known alignment sensor AS, such as is described, for example, in US6961116, and which is incorporated by reference. Radiation source RSO provides a beam RB of radiation of one or more wavelengths, which is diverted by diverting optics onto a mark, such as mark AM located on substrate W, as an illumination spot SP. In this example the diverting optics comprises a spot mirror SM and an objective lens OL. The illumination spot SP, by which the mark AM is illuminated, may be slightly smaller in diameter than the width of the mark itself.

Radiation diffracted by the mark AM is collimated (in this example via the objective lens OL) into an information-carrying beam IB. The term "diffracted" is intended to include zero-order diffraction from the mark (which may be referred to as reflection). A self-referencing interferometer SRI, e.g. of the type disclosed in US6961116 mentioned above, interferes the beam IB with itself after which the beam is received by a photodetector PD. Additional optics (not shown) may be included to provide separate beams in case more than one wavelength is created by the radiation source RSO. The photodetector may be a single element, or it may comprise a number of pixels, if desired. The photodetector may comprise a sensor array.

The diverting optics, which in this example comprises the spot mirror SM, may also serve to block zero order radiation reflected from the mark, so that the information-carrying beam IB comprises only higher order diffracted radiation from the mark AM (this is not essential to the measurement, but improves signal to noise ratios).

Intensity signals SI are supplied to a processing unit PU. By a combination of optical processing in the block SRI and computational processing in the unit PU, values for X- and Y-position on the substrate relative to a reference frame are output.

A single measurement of the type illustrated only fixes the position of the mark within a certain range corresponding to one pitch of the mark. Coarser measurement techniques are used in conjunction with this to identify which period of a sine wave is the one containing the marked position. The same process at coarser and/or finer levels may be repeated at different wavelengths for increased accuracy and/or for robust detection of the mark irrespective of the materials from which the mark is made, and materials on and/or below which the mark is provided. The wavelengths may be multiplexed and de-multiplexed optically so as to be processed simultaneously, and/or they may be multiplexed by time division or frequency division.

In this example, the alignment sensor and spot SP remain stationary, while it is the substrate W that moves. The alignment sensor can thus be mounted rigidly and accurately to a reference frame, while effectively scanning the mark AM in a direction opposite to the direction of movement of substrate W. The substrate W is controlled in this movement by its mounting on a substrate support and a substrate positioning system controlling the movement of the substrate support. A substrate support position sensor (e.g. an interferometer) measures the position of the substrate support (not shown). In an embodiment, one or more (alignment) marks are provided on the substrate support. A measurement of the position of the marks provided on the substrate support allows the position of the substrate support as determined by the position sensor to be calibrated (e.g. relative to a frame to which the alignment system is connected). A measurement of the position of the alignment marks provided on the substrate allows the position of the substrate relative to the substrate support to be determined.

Metrology and/or inspection tools (also referred to as measurement tools) such as the ones described above often use radiation to obtain measurement data. Depending on the measurement target and the properties to be measured, different types of radiation may be used. One differing property of radiation is the wavelength(s) used to obtain a measurement, as different wavelengths may provide different information about a measurement target. Some measurement tools may use broadband radiation, such as supercontinuum radiation, either to measure using broadband radiation, or to be able to tune and select the measurement wavelength(s) to be used. Depending on the range of output wavelengths and properties of the broadband source, difference methods may be used to obtain the broadband radiation. In some implementations for generating broadband radiation, nonlinear effects may be used to broaden narrow wavelength range input radiation (also referred to as pump radiation). Different known setups and methods exist to achieve nonlinear broadening. Often these methods rely on the confinement of the pump radiation to achieve high intensities needed to experience significant nonlinear effects.

A known method of confining radiation for nonlinear broadening includes confinement of laser pump radiation inside an optical fiber, to generate broadband radiation. The laser may be an ultrashort pulsed laser (e.g. pico- to femto-second pulses). The nonlinear propagation dynamics of this radiation inside a fiber may lead to broadband radiation generation as a result of soliton self-compression and/or modulational instability. This may for example be used to generate supercontinuum radiation spanning a wavelength range from IR to UV.

The methods described above may be used for generating broadband radiation using nonlinear broadening of laser pulses (e.g. femtosecond laser pulses) propagating along a gas-filled hollow core fiber e.g. a hollow core photonic crystal fiber (HC-PCF). The gas mixture (which may also be referred to as a gas composition) filling the fiber may comprise one or more components, wherein at least one of the components is a working gas. The working gas may be a gas that exhibits significant nonlinear effects when interacting with high intensity radiation. The performance and lifetime of the light source may depend on the composition of the gas mixture filling the fiber.

In the present disclosure we refer to two cases for the gas composition.

In a first case, a radiation source assembly may use a gas cell enclosing a gas composition of one or more noble gases only i.e. no use of hydrogen (or any other molecular gas). For example, the working gas may comprise at least one of Argon Ar, Krypton Kr, Neon Ne, and Xenon Xe. Such implementations, show no plasma-related instabilities and can make use of a working gas without hydrogen (or any other molecular gas) as a plasma quencher. Here it is required that the residual reactive gases are maintained at minimum levels. Example of concentrations c of impurities when Argon Ar is used are: *cO₂*≤ 2ppm, *cH₂O*≤3ppm, no traces of hydrogen, *cCₙHₘ*≤0.2ppm, *cN₂*≤5ppm*.* The values do not take into account outgassing of gas cell parts, those levels should be comparable to or less than the impurities concentrations in the filling working gas.

In a second case, a radiation source assembly may use a gas cell enclosing a gas composition of one or more noble gases mixed with a plasma quenching gas such as hydrogen (for example a mixture of Argon, Helium and Hydrogen). Such implementations, show plasma-related instabilities, and therefore relies on a very specific, carefully-tuned gas mixture of a working gas, a cooling gas, and a further gas component (a plasma quenching gas). A stable plasma may be formed inside the hollow core fiber. Because of the high intensity of the pump input pulses inside the hollow core fiber, each pulse may ionize a small fraction of the gas mixture, forming a plasma. This ionization may occur as a result of tunneling ionization. The plasma may be ionized while the laser pulse is present. In between laser pulses, the plasma may decay/recombine in between pulses. If the plasma population decays/recombines sufficiently fast between subsequent pulses, no plasma buildup will occur. However, if the plasma decay/recombination is too slow, and some plasma remains when the subsequent laser pulse arrives. The remaining free electrons may be accelerated by the next (and subsequent) laser pulse(s) and ionize further neutral atoms. This may result in an exponential growth of the plasma density inside the fiber. This plasma formation may ultimately lead to a strong absorption of the pump laser radiation and the generated broadband radiation. In this case a molecular gas such as hydrogen is added to the gas composition in order to quench plasma build-up in the gas.

The working gas may comprise at least one of Argon Ar, Krypton Kr, Neon Ne, and Xenon Xe. Depending on the type of working gas(es) in the gas composition, the nonlinear optical processes can include modulation instability (MI), soliton self-compression, soliton fission, Kerr effect, Raman effect and dispersive wave generation, details of which are described in WO2018/127266A1 and US9160137B1 (both of which are hereby incorporated by reference). Other properties, e.g. the pressure of the gas mixture inside the fiber, may affect the nonlinear broadening effects. The working gas may be an atomic gas with high enough optical nonlinearity and ionization potential for (1) producing spectral broadening, and (2) reducing overall level of ionization for increasing the lifetime.

The cooling gas may be a light gas that is configured to increase the thermal conductivity of the gas composition. The cooling gas may be an atomic gas with high enough thermal conductivity for improving the operation of the radiation source assembly at high repetition rate by reducing thermal effects accompanying white light generation process.

The further gas component (a plasma quenching gas) such as hydrogen or nitrogen is added to quench plasma buildup in the initiation phase of the white light and to solve the observed instability issue described above.

The inventors have observed that in both the first case and second case described above, (i) silicon-carrying molecules, (ii) H₂O i.e. moisture that remains in the gas cell as adsorbed molecules, on metal surfaces for instance, and (iii) residual gases such as O₂, CO₂, H₂ in the presence of light-produced plasma, in a closed gas cell, reduce lifetime of the radiation source assembly through the phenomenon of glassy growth. The addition of hydrogen into the gas composition also has two unwanted effects: (1) hydrogen itself plays an important role in the formation of volatile molecules such as SiH4 or molecules with high surface mobility such as SiHx with x<4. These create nucleation centres for the glassy growth; (2) Diffusion of hydrogen in certain metallic components of the cell could induce material property changes and it might induce embrittlement.

An alternative to use of hydrogen for solving the instability problem can be adding nitrogen into the gas cell environment. If used, nitrogen could lead to low temperature deposition of Si₃N₄ depending on availability of reaction species specific to its growth.

The present inventors have observed that contamination growths can develop on the end facets of the hollow core fiber and/or the optical ports of the radiation source assembly. The present inventors have observed that clusters of silica nanoparticles are formed in the initial stages of glassy growth. These nanoparticles are suspended in the gas cell until collected at the end facets of the hollow core fiber. The growth of contamination appears to occur where the intensity of the light is highest, in particular, contamination growth is higher at the output facet of the hollow core fiber than at the output optical port. Growth of contamination also appears to occur where the light has been spectrally broadened, in particular, contaminations do not grow as strongly on the input facet. In addition, contaminations are predominantly observed on the output facet of the hollow core fiber, and to a much lesser extent, inside the hollow core fiber itself.

The contaminants may develop due to silica particles being ablated from the windows of the gas cell, or from the hollow core fiber. Contaminants may undergo a photo-induced process with the broadened output light from the hollow core fiber and change their chemical structure and/or crystallize on the output facet. After a certain amount of hours in operation (e.g., after a certain dose (J) of laser energy has been transmitted), this contamination results in the fiber's performance being degraded; this degradation may be referred to as the glassy growth phenomenon (GGP): e.g., SiOₓ structures growing at the output end of the fiber.

The buildup of these contaminants results in a decreased lifetime of the light source. GGP and the resultant contamination growths at the output facet can protrude into the optical path of the diverging beam. This causes scattering of the output light and thus leads to the decay of output power of the light source. GGP shortens the lifetime of the source: GGP causes light scattering and therefore the fiber loses its performance. This may result, for example, in the required photon budget for the sensor not being met after approximately 200 hours. Also, GGP causes drift of the light source power / spectral density and mode profile which, if unresolved, will require frequent re-calibrations. As such, the short lifetime of the fiber means frequent fiber swaps in the field, and might cause a very significant downtime (on the order of days) for the machine per year. This is not acceptable for an industrialized product.

To date, known methods to reduce the concentration of contaminants and prevent their formation have focused on (i) rigorous cleaning of the gas cell and parts of a pump input assembly arranged to pump radiation into the gas cell, (ii) the techniques to manufacture the hollow core fiber itself e.g. tapering the ends of the hollow core fiber, and (iii) the particular gases used within the gas cell and their respective concentrations,

Figure 7 shows a schematic example of a contamination growth at the output end facet of a HC-PCF after an extended period of operation.

Radiation source assemblies will now be described that have an improved lifetime when operating as part of a broadband radiation generation source.

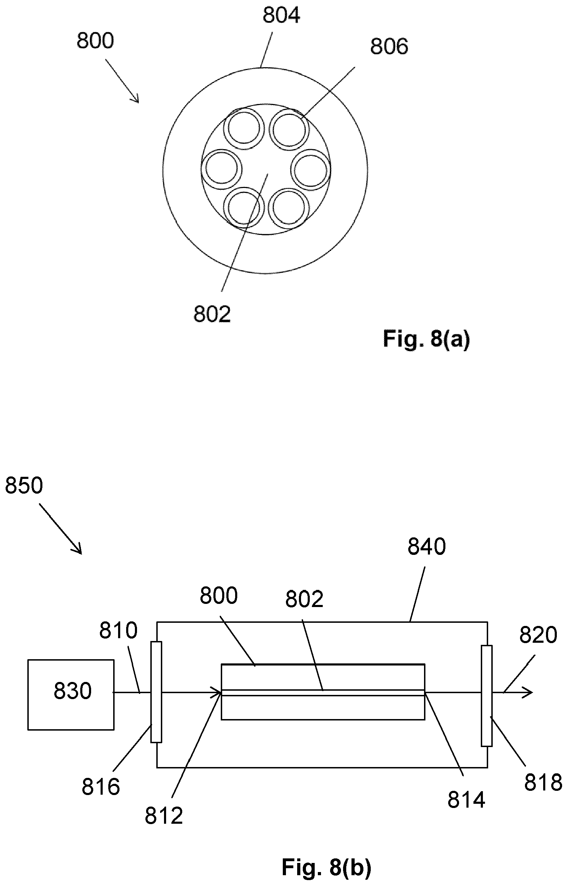

Provided herein is a hollow core fiber for broadband generation. Figure 8(a) depicts a cross-section of an example hollow-core fiber 800 that can be used for broadband radiation generation. Figure 8(b) depicts a hollow core fiber 800 in a radiation source assembly 850. The hollow core fiber 800 may be a hollow core photonic crystal fiber (HC-PCF). The hollow core fiber 800 has a hollow core 802 that is filled with a gas composition. The hollow core fiber 800 is configured to receive pump radiation 810 (e.g. pulsed pump radiation) at an input end 812 of the hollow core fiber 800. The hollow core fiber 800 is further configured to confine and guide the pump radiation through the fiber such that it interacts with gas composition (in particular a working gas) for generating broadband radiation through nonlinear broadening of the pump radiation. The broadened radiation may be provided as broadband output radiation 820 at an output end 814 of the hollow core fiber 800. During propagation, the radiation may be confined inside the hollow core 802 of the hollow core fiber 800.

Elements of the source assembly 850 depicted in figure 8(b) will now be described in more detail. The radiation source assembly 850 may comprise a pump input assembly 830 (e.g. a pulsed pump input assembly), for providing pump radiation to the source assembly 850. A pump input assembly 830 may be configured to provide input radiation 810, also referred to as pump radiation to the hollow core fiber 800. The hollow core 802 of the hollow core fiber 800 may be arranged to receive the input radiation 810 from the pump input assembly 830, and broaden it to provide output radiation 820. The gas mixture may enable the broadening of the frequency range of the received input radiation 810 so as to provide broadband output radiation 820. The pump input assembly 830 may be configured to receive the radiation from an external source, or may comprise a pump radiation source, such as a laser or any other type of source that is capable of generating short pulses of radiation having a desired length and energy level.

The broadband radiation may comprise supercontinuum radiation. The supercontinuum radiation may comprise radiation in a range spanning from ultraviolet UV to infrared IR radiation. This may be for example from 100 nm - 2000 nm, from 200 nm to 2000 nm, from 200 nm to 1600 nm, or in a range from 400 nm to 1600 nm.

The input/pump radiation may be pulsed pump radiation. The pump radiation may be a single (pulsed) radiation beam provided to the optical input. The radiation may be in a range from 400 nm to 2000 nm, or in a range from 800 nm to 1600 nm. The pulse radiation may comprise radiation at one or more specific wavelengths, for example 400 nm, 515 nm, 532 nm, 800 nm, 1030 nm, 1064 nm, 1550 nm, and/or 2000 nm. The repetition rate of the pulsed radiation may be of an order of magnitude of 1 kHz to 100 MHz. The pulse energies may have an order of magnitude of 0.1 µJ to 100 µJ, for example 1-10 µJ. A pulse duration for the input radiation may be between 10 fs and 10 ps, for example 300 fs. The average power of input radiation may be between 100 mW to several 100 W. The average power of input radiation may for example be 20 - 50 W. The pulsed pump power may have a pulse power exceeding an ionization threshold of the gas composition.

The hollow core 802 of the hollow core fiber 800 is filled with a gas composition. The hollow core fiber 800 is provided in a gas cell 840 (also referred to as housing, container, or reservoir). The gas cell 840 may be configured to provide the gas composition to the hollow core fiber 800 when the source assembly 850 is in use. The gas cell 840 is configured to provide and contain the gas composition. The gas cell may comprise one or more features, known in the art, for controlling, regulating, and/or monitoring the composition of the gas composition. In use, a hollow core fiber 800 is disposed inside the gas cell 840 such that a first transparent window is located proximate to an input end 812 of the fiber 800. The first transparent window 816 (also referred to as input port, or input optical port) may be transparent for at least the received input radiation frequencies, so that received input radiation 810 (or at least a large portion thereof) may be coupled into the hollow core 802 of the fiber 800 located inside the gas cell 840. It will be appreciated that optics (not shown) may be provided for coupling the input radiation 810 into the optical fiber 800. In use, an output end 814 of the hollow core fiber 800 may be proximate to a second transparent window 818 (also referred to as output port, or output optical port). The second transparent window 818 may be transparent for at least the frequencies of the broadband output radiation 820 of the radiation source assembly 850.

In order to achieve frequency broadening, high intensity radiation may be desirable. An advantage of having a hollow core fiber is that it may achieve high intensity radiation through strong spatial confinement of radiation propagating through the fiber 800, achieving high localised radiation intensities. The radiation intensity inside the optical fiber may be high, for example due to high received input radiation intensity and/or due to strong spatial confinement of the radiation inside the hollow core fiber. A hollow core fiber may confine and guide the majority of radiation inside the hollow core 802 of the fiber. Hollow core fibers 800 may be able to guide radiation having a broader wavelength range than solid-core fibers and, in particular, hollow core optical fibers can guide radiation in both the ultraviolet and infrared ranges.

An example hollow core fiber 800 as shown in figures 8(a) and 8(b) will now be described in more detail. A fiber 800 may comprise an elongate body, defining a length of the fiber. The length of the fiber is the dimension that is longer compared to the other two dimensions of the fiber. This longer dimension may be referred to as an axial direction and may define an axis of the hollow core fiber. The two other dimensions of the fiber, as shown in figure 8(a) define a plane that may be referred to as a transverse plane. Figure 8(a) shows a cross-section of a hollow core fiber 800 in this transverse plane (i.e. perpendicular to the axis). The transverse cross-section of the hollow core fiber 800 may be substantially constant along the fiber axis.

It will be appreciated that the hollow core fiber 800 has some degree of flexibility and therefore the direction of the axis will not, in general, be uniform along the length of the fiber 800. The terms such as the optical axis, the transverse cross-section and the like will be understood to mean the local optical axis, the local transverse cross-section and so on. Furthermore, where components are described as being cylindrical or tubular these terms will be understood to encompass such shapes that may have been distorted as the hollow core fiber 800 is flexed.

The hollow core fiber may have any length and it will be appreciated that the length of the fiber 800 may be dependent on the application. The fiber may for example have a length between 1 cm and 10 m. The hollow core fiber 800 may for example have a length between 10 cm and 100 cm.

The hollow core fiber may comprise a hollow core 802 surrounded by a cladding portion 804. A support portion may be provided, surrounding and supporting the cladding portion 804. The hollow core fiber 800 may be considered to comprise a body (comprising the cladding portion and the support portion SP) having a hollow core 802. The hollow core fiber 800 may comprise a plurality of anti-resonance elements 806 for guiding radiation through the hollow core 802. In some implementations, the plurality of anti-resonance elements 806 may be arranged to confine radiation that propagates through the fiber 800 predominantly inside the hollow core 802. The anti-resonance elements may guide the radiation along the fiber 800. The hollow core 800 may be disposed substantially in a central region of the fiber 802, so that the axis of the fiber 800 may also define an axis of the hollow core 802.

In some implementations, the anti-resonance elements 806 may comprises a plurality of capillaries. The capillaries may be arranged in a single ring of capillaries surrounding the hollow core 802. In a particular example, the cladding portion 804 may comprise a single ring of six tubular capillaries 806 surrounding the hollow core, wherein each of the tubular capillaries may act as an anti-resonance element.

In some embodiments, the gas composition may comprise one or more noble gases only i.e. no use of hydrogen (or any other molecular gas). For example, the working gas may comprise at least one of Argon Ar, Krypton Kr, Neon Ne, and Xenon Xe. In these embodiments, the getter disposed in the gas cell ensures that a clean gas environment is provided in the closed gas cell.

In other embodiments, the gas composition may comprise a working gas, a cooling gas, and a further gas component (a plasma quenching gas) e.g. hydrogen. In these embodiments, the getter disposed in the gas cell ensures that the partial pressures of reactive gases are kept below a threshold for significant buildup of glassy growth, while keeping the optimum amount of the plasma quenching gas to prevent plasma buildup.

The working gas may comprise at least one of Argon Ar, Krypton Kr, Neon Ne, and Xenon Xe. The working gas may be a gas that exhibits significant nonlinear effects when interacting with high intensity radiation. The working gas may be an atomic gas with high enough optical nonlinearity and ionization potential for (1) producing spectral broadening, and (2) reducing overall level of ionization for increasing the lifetime.

The cooling gas may be a light gas that is configured to increase the thermal conductivity of the gas composition. The cooling gas may be an atomic gas with high enough thermal conductivity for improving the operation of the radiation source assembly at high repetition rate by reducing thermal effects accompanying white light generation process. The cooling gas may comprise at least one of helium He or neon Ne. In a specific example, the cooling gas may be helium gas. The cooling gas may make up from 20% to 70% of the gas composition, or from 20% to 50% of the gas composition.

The further gas component (a plasma quenching gas) is added to quench plasma buildup in the initiation phase of the white light and to solve the observed instability issue described above. The further gas component may be less than 4% of the total gas composition in the hollow core fiber 800, optionally less than 2% of the total gas composition, optionally less than 1 % of the total gas composition in the hollow core fiber 800.

The further gas component may be provided in a range from 0.001% to 1% of the gas composition. The further gas component may be provided in a range from 0.01% to 1% of the gas composition. Having the further gas component present as a low percentage of the gas composition may still achieve the plasma quenching effect. If the amount of the further gas component present in the gas composition becomes too high, this may cause safety concerns, as the gas composition may become flammable. A greater presence of the further gas component in the gas composition may also increase the risk of contamination with impurities. Therefore, it is desirable to leave the percentage of the further gas component present below an upper threshold. Although the threshold described above is 1%, the upper threshold may in some instances be set as 2%, or 4%.

The further gas component may comprise hydrogen gas. The further gas component may comprise at least one isotope of hydrogen gas. The isotope of hydrogen gas may comprise at least one of deuterium and tritium. The further gas component may comprise nitrogen.

Below we describe various different implementations that may be used to deploy one or more getters in the gas cell 840 such that the one or more getters are at least partially surrounded by the gas composition in the gas cell 840.

In all of the different implementations described herein, a getter may be a non-evaporative getter which requires high temperatures (e.g. in the range of 400-500⁰C) for activation, with operating temperatures in the range of 20-200⁰C. Examples are getters comprising alloys of Zr-V-Fe. Other similar getters can be selected from the intermetallic zirconium system. In these examples, the getter may be coupled to an induction heating coil or an electrical wire (to pass electrical current) to enable the heating of the getter.

In all of the different implementations described herein, a getter may be a non-evaporative getter which can be used without activation after being placed in the gas cell 840 e.g. the getter may comprise Ca₃O₄ (used for trapping moisture) and/or BaLi₄ (used for N2 and other active gases). In these cases exposure of the getter to ambient environment should be accounted for in order to prevent saturation.

In all of the different implementations described herein, a getter may be an irreversible getter. For example, the getter may use manganese oxide, silver oxide, and/or cobalt oxide (e.g. for hydrogen retention) as the trapping media.

In all of the different implementations described herein, a getter may comprise one or more getter elements (e.g. beads or pellets), each of the one or more getter elements comprising a porous material and zeolite crystals.

It will be appreciated that handling of a getter during installation should take place in such conditions that absorption properties are preserved. If the getter materials are in a powder state the getter is to be enclosed in gas permeative casing.

It will be appreciated that in implementations where a plurality of getters are placed in the gas cell 840, the plurality of getters may be of the same type or of different types.

In embodiments of the present invention, evaporative getters are not used directly in the gas cell 840 due to risks of altering optical properties of the optical surfaces in the light path.

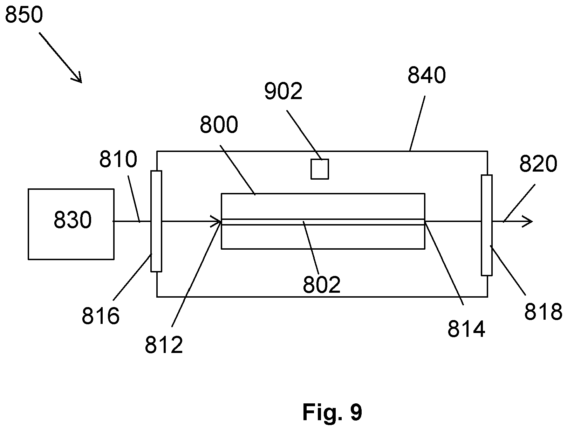

Figure 9 depicts a schematic representation of a getter 902 positioned in the radiation source assembly 850. In particular, the getter 902 is enclosed by the gas cell 840 and is at least partially surrounded by the gas composition in the gas cell 840. The getter 902 may take the form of any of the examples referred to herein. Whilst a single getter 902 is shown as being enclosed in the gas cell 840, it will be appreciated that a plurality of getters may be deployed in the gas cell 840. Whilst a particle filter is not shown in Figure 9, a particle filter may be provided within the gas cell 840 shown in Figure 9.

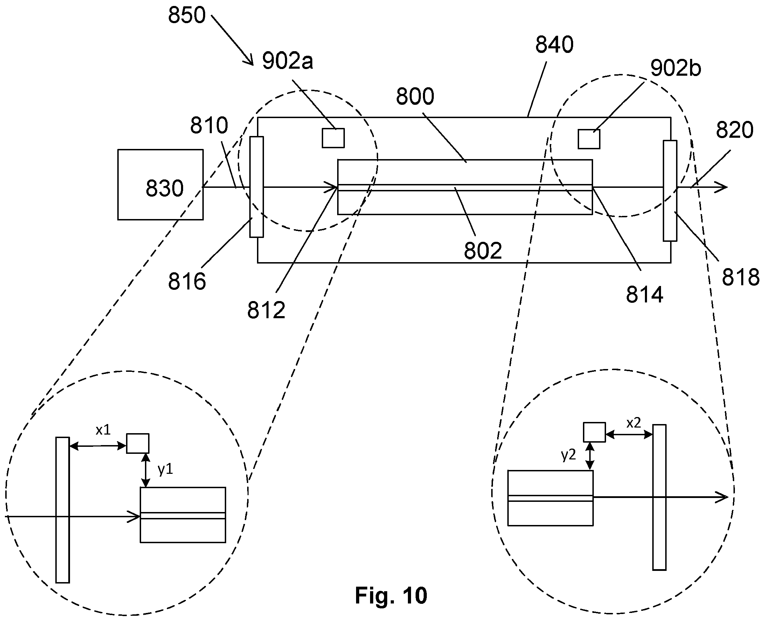

Figure 10 depicts a schematic representation of a plurality of getters positioned in the radiation source assembly 850. In embodiments of the present invention, each getter is positioned in the radiation source assembly 850 outside the path of radiation travelling through the gas cell but at a location where, in use, the gas composition will flow (e.g. due to thermal effects). A getter may be placed at a location where, in use, the flow of the gas composition is greater than at other locations in the gas cell.

As shown in the arrangement of Figure 10, a getter 902a may be provided at a location in the gas cell 840 that coincides with maximum flow of the gas composition in the gas cell towards the input end 812 of the hollow-core fiber 800. In particular, a getter 902a is positioned within the gas cell 840 at a distance (x1) from the input port 816 of less than 5mm, optionally less than 2mm; and further optionally less than 1.5mm. As shown in Figure 10, the distance (x1) is in the axial direction between the getter 902a and the input port 816. Alternatively, or additionally, the getter 902a is positioned within the gas cell 840 at a distance (y1) from the input end of the hollow core fiber 800 of less than Smm, optionally less than 2mm; and further optionally less than 1.5mm. As shown in Figure 10, the distance (y1) is in a direction perpendicular to the axial direction between the getter 902a and an outer surface of the cladding portion 804 at the input end of the hollow core fiber 800.

Alternatively, or additionally a getter 902b may be provided at a location in the gas cell 840 that coincides with maximum flow of the gas composition in the gas cell at the output end 814 of the hollow-core fiber 800. In particular, a getter 902b is positioned within the gas cell at a distance (x2) from the output port 818 of less than 5mm, optionally less than 2mm; and further optionally less than 1.5mm. As shown in Figure 10, the distance (x2) is in the axial direction between the getter 902b and the output port 818. Alternatively, or additionally, the getter 902b is positioned within the gas cell 840 at a distance (y2) from the output end 814 of the hollow core fiber of less than Smm, optionally less than 2mm; and further optionally less than 1.5mm. As shown in Figure 10, the distance (y2) is in a direction perpendicular to the axial direction between the getter 902b and an outer surface of the cladding portion 804 at the input end of the hollow core fiber 800.

Whilst a particle filter is not shown in Figure 10, a particle filter may be provided within the gas cell 840 shown in Figure 10.

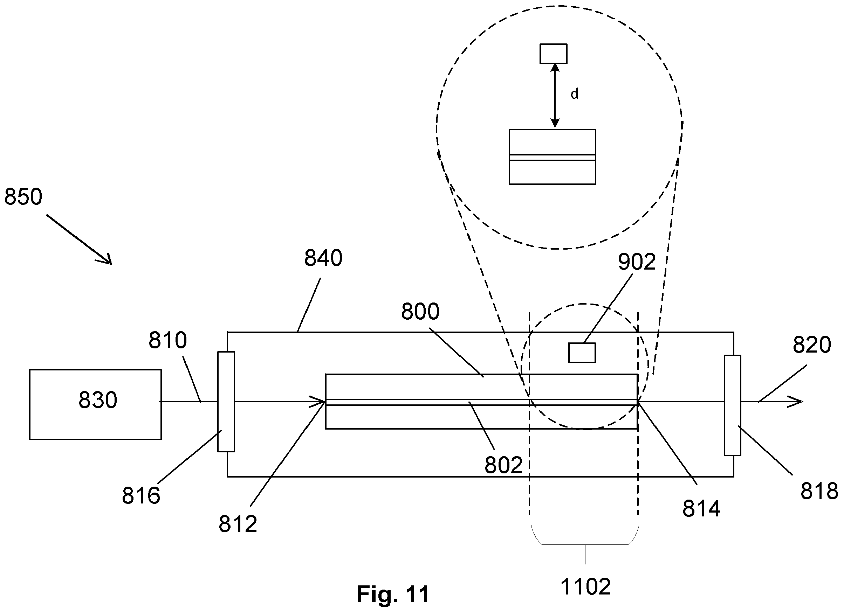

As shown in the arrangement of Figure 11, a getter 902 may be positioned in the radiation source assembly 850 in the vicinity of a section 1102 of the hollow core fiber 800 in which broadband radiation is generated in use. That is, the getter 902 is provided at a location in the gas cell 840 at a distance (d) from the section 1102 of the hollow core fiber 800 in which broadband radiation is generated within the hollow core fiber in use, of less than Smm, preferably less than 2mm; and more preferably less than 1.5mm. As shown in Figure 11, the distance (d) is in a direction perpendicular to the axial direction between the getter 902 and an outer surface of the cladding portion 804 of the section 1102 of the hollow core fiber 800 in which broadband radiation is generated in use. Whilst a particle filter is not shown in Figure 11, a particle filter may be provided within the gas cell 840 shown in Figure 11. Whilst a single getter 902 is shown in Figure 11 as being enclosed in the gas cell 840, it will be appreciated that a plurality of getters may be deployed in the gas cell 840.

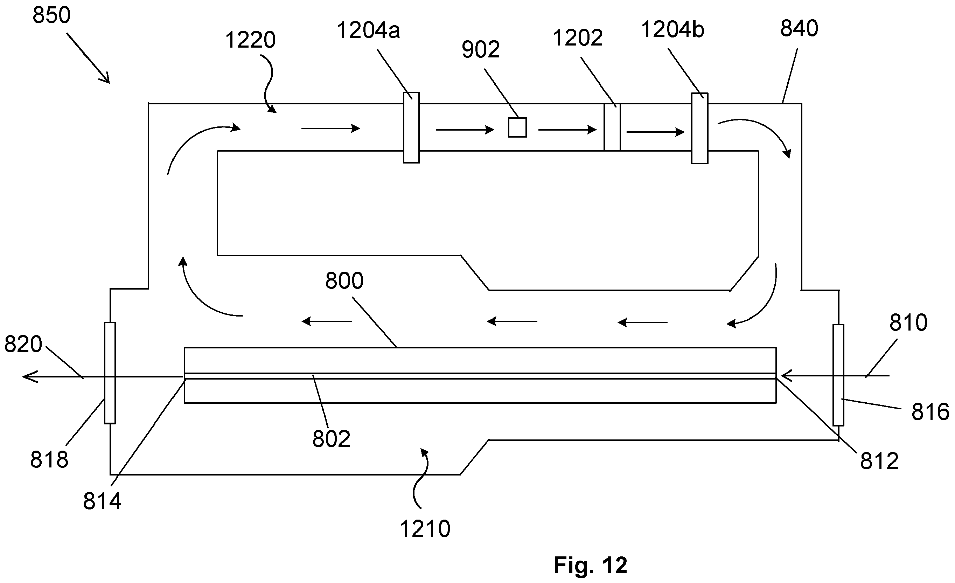

Figure 12 depicts a schematic representation of a getter 902 positioned in a radiation source assembly 850 which comprises a gas cell 840 having first and second channels. In particular, the gas cell 840 comprises a first channel 1210 enclosing the hollow core fiber 800, and a second channel 1220. The second channel 1220 is coupled to the first channel 1210. In particular, the second channel 1220 is in fluidic communication with the first channel 1210. The arrows illustrated in Figure 12 depict the gas flow within the gas cell 840. The gas flow is present within the gas cell 840 because dissipative processes are higher towards the end of the fiber. As shown in Figure 12, the gas composition flows through the first channel 1210, and the second channel 1220 provides a feedback path for the gas composition to circulate in the gas cell 840. A getter 902 is provided within the second channel. The gas cell 840 may also comprise a particle filter 1202. As shown in the Figure 12, the particle filter 1202 may be provided in the second channel. The particle filter 1202 may be separated from the getter 902 (as shown in the Figure 12) allowing maximum flow and highest efficiency. Two isolation valves 1204a and 1204b, located either side of the getter 902, may be opened and closed to pass and restrict gas flow respectively. The two isolation valves 1204a, 1204b can be used for loading the getter 902 into the gas cell 840, and activation, without interfering with the rest of the gas cell 840. The geometry and orientation of the gas cell 840 is such to lead to an optimized gas flow for cleaning the working gas in the gas composition. Whilst a single getter 902 is shown in Figure 12 as being enclosed in the gas cell 840, it will be appreciated that a plurality of getters may be deployed in the gas cell 840. For example, a plurality of getters may be provided in the second channel 1220.

Optionally, an external source of heat may be used to heat a section of the gas cell 840 in order to apply heat to the gas composition enclosed within the gas cell 840 to obtain a convective gas flow within the gas cell 840. The external source of heat may be controlled to apply heat to one or more sections of the gas cell 840 during periods when no white light is generated (e.g. during a service time) and/or during periods when white light is generated. For example, a periodic heating process may overlap a certain duty cycle within which the white light is switched on and off. The flow rate of the gas composition in the gas cell 840 can be controlled by selection of a certain geometry of the gas cell 840.

In the arrangements of Figures 9-12, if the getter comprises one or more getter elements (e.g. beads or pellets) with each of the one or more getter elements comprising a porous material and zeolite crystals, then it may not be necessary to provide a separate particle filter given that the getter itself functions to trap particles such as silica nanoparticles.

In the arrangements of Figures 9-12, an external source of heat may be used to heat a section of the gas cell 840 in order to apply heat to the gas composition enclosed within the gas cell 840. This heat may be generated asymmetrically along the gas cell 840. This can be influenced by the orientation of the gas cell 840 with respect to the direction of gravity.

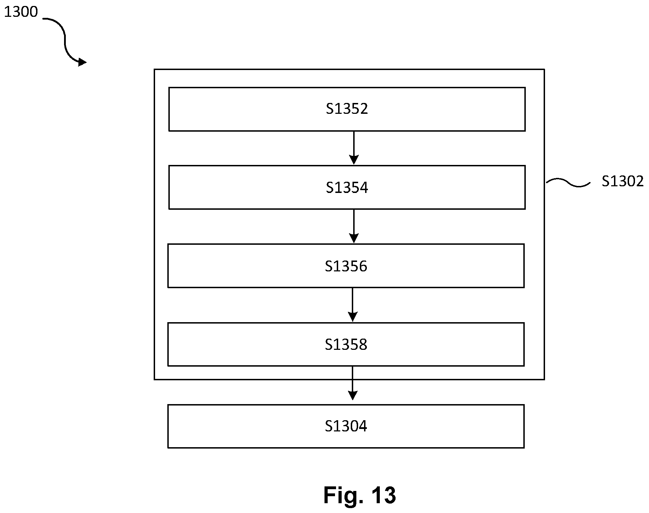

Figure 13 depicts a flowchart of an example method 1300 for generating broadband radiation. The method 1300 comprises a step 1302 of providing a radiation source assembly 850 according to any of the embodiments as described herein. The method 1300 further comprises a step S1304 of providing pump radiation to an input end 812 of the hollow core fiber 800 to generate broadband radiation, as described herein.

In embodiments whereby the gas composition in the gas cell 840 comprises the further gas component (e.g. hydrogen), and the getter provided within the gas cell 840 is not selective to the further gas component (e.g. it absorbs the further gas component alongside other trace gases) and can operate at room temperature without thermal activation, the step 1302 of providing the radiation source assembly 850 may comprise steps to load the getter with the further gas component. These steps are described below with reference to an example whereby the further gas component is hydrogen.

After the getter has been placed inside the gas cell 840, the method 1300 may comprise evacuating (S1352) the gas cell 840 to a pressure less than a predetermined pressure value (e.g. 1mbar). The predetermined pressure value may be in the range 0.5-10mbar, optionally 0.5-5mbar.

After the gas cell is evacuated to less than the predetermined pressure value, the method 1300 may comprise saturating (S1354) the getter with hydrogen (i.e. a gas corresponding to the further gas component in the gas composition). For example the gas cell 840 may be flushed with a gas mixture comprising hydrogen (e.g. an Ar/H2 gas mixture) or pure hydrogen in order to saturate the getter, thus reducing it capacity for absorbing the plasma quenching gas of the gas composition when provided in the gas cell 840. This flushing can be stopped once the getter is saturated with hydrogen.

After the getter is saturated with hydrogen, the method 1300 may comprise evacuating (S 1356) the gas cell 840 to a pressure of less than the predetermined pressure value.

The method 1300 may then comprise filling (S1358) the gas cell 840 with the gas composition (comprising hydrogen as the further gas component) to be used for generating broadband radiation.

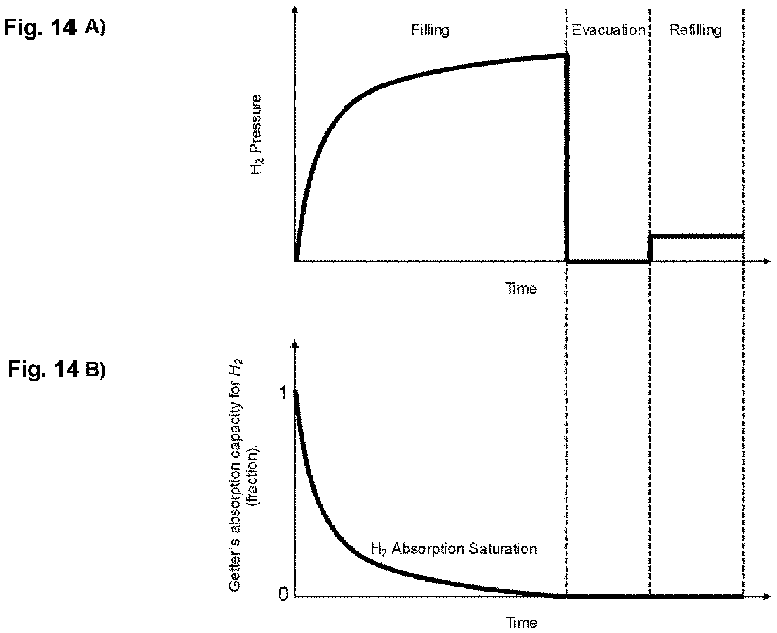

Figure 14a is a waveform illustrating the pressure of hydrogen in the gas cell whilst saturating a getter in the gas cell with hydrogen, and filling the gas cell with a gas composition comprising hydrogen; and Figure 14b is a waveform illustrating a getter's absorption capacity for hydrogen during the saturating of the getter in the gas cell with hydrogen, and the filling of the gas cell with a gas composition comprising hydrogen. As shown in Figures 14a and 14b, due to saturating the getter with hydrogen, when the gas cell 840 is filled with the gas composition (comprising hydrogen as the further gas component) at step S1358, the hydrogen in the gas composition will not be absorbed, thereby maintaining the optimum level of hydrogen in the gas composition

Whilst Figures 13, 14(a) and 14(b) are described with reference to hydrogen being used as the plasma quenching gas in the gas composition and thus to saturate the getter, it will be appreciated that this is merely an example, and other molecular gases may alternatively be used as the further gas component in the gas composition and thus to saturate the getter.

Further embodiments are disclosed in the subsequent list of numbered clauses:
1. A radiation source assembly for generating broadband radiation, the radiation source assembly comprising:
   a gas cell enclosing a hollow core fiber, wherein the gas cell comprises an input port arranged to receive pump radiation, and an output port arranged to output the broadband radiation, wherein the gas cell and a hollow core of the hollow core fiber is filled with a gas composition; and
   at least one getter provided within the gas cell and at least partially surrounded by the gas composition;
   wherein the hollow core fiber is arranged to receive the pump radiation at an input end of the hollow core fiber, and output the broadband radiation at an output end of the hollow core fiber.
2. The radiation source assembly of clause 1, wherein a getter of the at least one getter is positioned:
   within the gas cell at a distance from the input port of less than 5mm, optionally less than 2mm; and further optionally less than 1.5mm; and/or
   within the gas cell at a distance from the input end of the hollow core fiber of less than Smm, optionally less than 2mm; and further optionally less than 1.5mm.
3. The radiation source assembly of any preceding clause, wherein a getter of the at least one getter is positioned:
   within the gas cell at a distance from the output port of less than Smm, optionally less than 2mm; and further optionally less than 1.5mm; and/or
   within the gas cell at a distance from the output end of the hollow core fiber of less than Smm, optionally less than 2mm; and further optionally less than 1.5mm.
4. The radiation source assembly of any preceding clause, wherein a getter of the at least one getter is positioned within the gas cell at a distance from a section of the hollow core fiber in which broadband radiation is generated within the hollow core fiber in use, of less than Smm, preferably less than 2mm; and more preferably less than 1.5mm
5. The radiation source assembly of any preceding clause, wherein a plurality of getters are provided within the gas cell and at least partially surrounded by the gas composition.
6. The radiation source assembly of any preceding clause, wherein the plurality of getters are distributed within the gas cell at different locations along the hollow core fiber.
7. The radiation source assembly of any preceding clause, wherein the radiation source assembly comprises a particle filter provided within the gas cell and at least partially surrounded by the gas composition.
8. The radiation source assembly of any preceding clause, wherein the gas cell comprises:
   a first channel enclosing the hollow core fiber; and
   a second channel coupled to the first channel, the second channel providing a feedback path for the gas composition to circulate in the gas cell, wherein a getter of the at least one getter is provided within the second channel.
9. The radiation source assembly of clause 8 when dependent on clause 7, wherein the particle filter is provided within the second channel.
10. The radiation source assembly of any preceding clause, wherein a getter of the at least one getter comprises a Zirconium Vanadium Iron alloy.
11. The radiation source assembly of any preceding clause, wherein a getter of the at least one getter comprises Ca₃O₄ and/or BaLi₄.
12. The radiation source assembly of any preceding clause, wherein a getter of the at least one getter comprises at least one of manganese oxide, silver oxide, and cobalt oxide.
13. The radiation source assembly of any preceding clause, wherein a getter of the at least one getter comprises one or more getter elements, each of the one or more getter elements comprising a porous material and zeolite crystals.
14. The radiation source assembly of any preceding clause, wherein a pressure of the gas composition is at least 5 bar, optionally at least 30 bar, optionally at least 60 bar.
15. The radiation source assembly of any preceding clause, wherein the gas composition comprises at least one noble gas.
16. The radiation source assembly of any preceding clause, wherein the gas composition comprises a working gas.
17. The radiation source assembly of clause 14, wherein the working gas comprises at least one of Argon, Krypton, Neon, and Xenon.
18. The radiation source assembly of any preceding clause, wherein the gas composition comprises a cooling gas, wherein the cooling gas optionally comprises at least one of helium, and neon.
19. The radiation source assembly of any preceding clause, wherein the gas composition comprises a gas component which is less than 4% of the total gas composition in the hollow core fiber.
20. The radiation source assembly of clause 19, wherein the gas component comprises hydrogen, at least one isotope of hydrogen, or nitrogen.
21. The radiation source assembly of any preceding clause, wherein the hollow core fiber is a hollow core photonic crystal fiber.
22. The radiation source assembly of clause 21, wherein the hollow core photonic crystal fiber comprises a single ring of capillaries around a hollow core.
23. A radiation source assembly according to any preceding clause, wherein the broadband radiation comprises supercontinuum radiation.
24. A radiation source assembly according to any preceding clause, wherein the broadband radiation comprises radiation with wavelengths in a range from 200 nm - 2000 nm.
25. A radiation source assembly according to any preceding clause, further comprising a pump input assembly configured to provide the pump radiation to the hollow core fiber.
26. A radiation source assembly according to clause 25, wherein the pump input assembly comprises a pulsed pump laser.
27. A metrology apparatus for determining a characteristic of interest of a structure on a substrate, the metrology apparatus comprising a radiation source assembly according to any of clauses 1 - 26.
28. An inspection apparatus for inspecting a structure on a substrate, the inspection apparatus comprising a radiation source assembly according to any of clauses 1 - 26.
29. A lithographic apparatus comprising a radiation source assembly according to any of clauses 1 -26.
30. A litho cell comprising an apparatus according to any of clauses 27, 28, or 29.
31. A method of generating broadband radiation, comprising:
   providing a radiation source assembly according to any of clauses 1 - 26; and
   providing the pump radiation to the input end of the hollow core fiber to generate the broadband radiation.
32. The method of clause 31, wherein the gas composition comprises a gas component which is less than 4% of the total gas composition in the hollow core fiber, wherein the providing comprises:
   evacuating the gas cell to a pressure of less than a predetermined pressure value;
   after said evacuating, saturating the getter with a gas corresponding to the gas component in the gas composition;
   after said saturating, evacuating the gas cell to a pressure of less than the predetermined pressure value; and
   filling the gas cell with the gas composition.

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

Although specific reference may have been made above to the use of embodiments of the invention in the context of optical lithography, it will be appreciated that the invention, where the context allows, is not limited to optical lithography and may be used in other applications, for example imprint lithography.

Although specific reference is made to "metrology apparatus / tool / system" or "inspection apparatus / tool / system", these terms may refer to the same or similar types of tools, apparatuses or systems. E.g. the inspection or metrology apparatus that comprises an embodiment of the invention may be used to determine characteristics of structures on a substrate or on a wafer. E.g. the inspection apparatus or metrology apparatus that comprises an embodiment of the invention may be used to detect defects of a substrate or defects of structures on a substrate or on a wafer. In such an embodiment, a characteristic of interest of the structure on the substrate may relate to defects in the structure, the absence of a specific part of the structure, or the presence of an unwanted structure on the substrate or on the wafer.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

## Claims

1. A radiation source assembly for generating broadband radiation, the radiation source assembly comprising:
a gas cell enclosing a hollow core fiber, wherein the gas cell comprises an input port arranged to receive pump radiation, and an output port arranged to output the broadband radiation, wherein the gas cell and a hollow core of the hollow core fiber is filled with a gas composition; and
at least one getter provided within the gas cell and at least partially surrounded by the gas composition;
wherein the hollow core fiber is arranged to receive the pump radiation at an input end of the hollow core fiber, and output the broadband radiation at an output end of the hollow core fiber.

2. The radiation source assembly of claim 1, wherein a getter of the at least one getter is positioned:
within the gas cell at a distance from the input port of less than Smm, optionally less than 2mm; and further optionally less than 1.5mm; and/or
within the gas cell at a distance from the input end of the hollow core fiber of less than Smm, optionally less than 2mm; and further optionally less than 1.5mm.

3. The radiation source assembly of any preceding claim, wherein a getter of the at least one getter is positioned:
within the gas cell at a distance from the output port of less than Smm, optionally less than 2mm; and further optionally less than 1.5mm; and/or
within the gas cell at a distance from the output end of the hollow core fiber of less than Smm, optionally less than 2mm; and further optionally less than 1.5mm.

4. The radiation source assembly of any preceding claim, wherein a getter of the at least one getter is positioned within the gas cell at a distance from a section of the hollow core fiber in which broadband radiation is generated within the hollow core fiber in use, of less than Smm, preferably less than 2mm; and more preferably less than 1.5mm

5. The radiation source assembly of any preceding claim, wherein a plurality of getters are provided within the gas cell and at least partially surrounded by the gas composition.

6. The radiation source assembly of any preceding claim, wherein the plurality of getters are distributed within the gas cell at different locations along the hollow core fiber.

7. The radiation source assembly of any preceding claim, wherein the radiation source assembly comprises a particle filter provided within the gas cell and at least partially surrounded by the gas composition.

8. The radiation source assembly of any preceding claim, wherein a getter of the at least one getter comprises at least one of a Zirconium Vanadium Iron alloy, Ca₃O₄, BaLi₄, manganese oxide, silver oxide, and cobalt oxide.

9. The radiation source assembly of any preceding claim, wherein a getter of the at least one getter comprises one or more getter elements, each of the one or more getter elements comprising a porous material and zeolite crystals.

10. The radiation source assembly of any preceding claim, wherein a pressure of the gas composition is at least 5 bar, optionally at least 30 bar, optionally at least 60 bar.

11. The radiation source assembly of any preceding claim, wherein the gas composition comprises at least one noble gas.

12. The radiation source assembly of any preceding claim, wherein the gas composition comprises a gas component which is less than 4% of the total gas composition in the hollow core fiber.

13. The radiation source assembly of claim 12, wherein the gas component comprises hydrogen, at least one isotope of hydrogen, or nitrogen.

14. A metrology apparatus for determining a characteristic of interest of a structure on a substrate, the metrology apparatus comprising a radiation source assembly according to any of claims 1-13.

15. A method of generating broadband radiation, comprising:
providing a radiation source assembly according to any of claims 1 - 13; and
providing the pump radiation to the input end of the hollow core fiber to generate the broadband radiation.
